# EUROPEAN PATENT APPLICATION

(11) **EP 1 773 052 A2**
(43) Date of publication of application: **11.04.2007**
(21) Application number: 06291526.9
(22) Date of filing: 28.09.2006
(51) Int. Cl.: H04N 5/76

(54) **Personal video recorder and method of transmitting broadcast signal to external multimedia apparatus from the same**

(30) Priority: 30.09.2005 KR 20050092546
(71) Applicant: LG Electronics Inc., Yongdungpo-Gu Seoul (KR)
(72) Inventor: Song, Dae Chul, Seoul 139-956 (KR)
(74) Representative: Loisel, Bertrand

(57) **Abstract**

A personal video recorder and method of transmitting a broadcast signal to an external multimedia apparatus from the same are disclosed, by which various application environments can be provided by establishing a multimedia support environment in transmitting broadcast data or reproducing a broadcast signal by a multimedia device in a manner of interconnecting a PVR to the multimedia device. The present invention includes connecting an external multimedia device to a personal video recorder, setting an encoding option corresponding to A/V parameters of the connected external multimedia device, receiving a broadcast signal via a tuner of the personal video recorder, separating A/V data into an audio signal and a video signal by demultiplexing the received broadcast signal, transcoding the separated audio and video signals into transcoded data by the set encoding parameter and transferring the transcoded data to the external multimedia device.

## Description

This application claims the benefit of the Korean Patent Application No. 10-2005-0092546, filed on September 30, 2005, which is hereby incorporated by reference as if fully set forth herein.

### BACKGROUND OF THE INVENTION

### Field of the Invention

The present invention relates to a transmission and reproduction technology of digital broadcasting, and more particularly, to a personal video recorder and method of transmitting a real-time broadcast signal to an external multimedia apparatus from the same. Although the present invention is suitable for a wide scope of applications, it is particularly suitable for transmitting a broadcast signal to a portable multimedia player (PMP) immediately using a personal video recorder.

### Discussion of the Related Art

Generally, a personal video recorder (hereinafter abbreviated PVR) is an electronic device used by a normal consumer.

The PVR is able to record, store and display broadcast contents of television (hereinafter abbreviated TV) through a hard disc in a digital format.

The PVR facilitates a so-called 'time shift' operation of a VCR to be executed and has unique digital functions of tape-less rewind, live TV broadcast pause, synthetic program guide, per-series recording (storage), large-scale storage space (day-unit storage capacity compared to 2∼3 hours storage capacity of VCR), etc.

And, the PVR is able to set a program to be viewed for a reserved recording in a manner of previewing latest programs in advance (e.g., 14 days ahead) and display user's favorite programs only according to titles, keywords or categories of sports, movies, news, music, children's programs and the like in a manner of selecting a category filter.

So, the PVR will be globally supplied due to its convenience and various diversity according to the full-scale digital broadcasting.

Meanwhile, as another digital device, there is a portable multimedia player (hereinafter abbreviated PMP) similar to MP3 player. The PMP is a large-scale hard disc or flash memory based device.

The PMP is a portable digital device capable of storing and playing at least one or more media formats. Variously formatted videos (e.g., MPEG, DivX, XviD), audios (e.g., MP3, WAV, Ogg Vorbis) or digital images (e.g., BMP, JPEG, GIF, etc.) can be loaded in the PMP to be played.

And, the PMP is able to display video and/or image on a color LCD or OLED screen.

So, a user is able to appreciate the stored multimedia data at anytime no matter where he is.

Hence, the PVR's broadcast reception and application versatility are combined with the PMP's mobility, reproduction versatility and display capability to provide maximized convenience or applicability.

FIG. 1 is a block diagram of a PVR 10 and a PMP 20 connected as an external device to the PVR 10 to explain a data transmission process in-between.

FIG. 2 is a flowchart of a process for transferring broadcast data received by a PVR to a PMP 20.

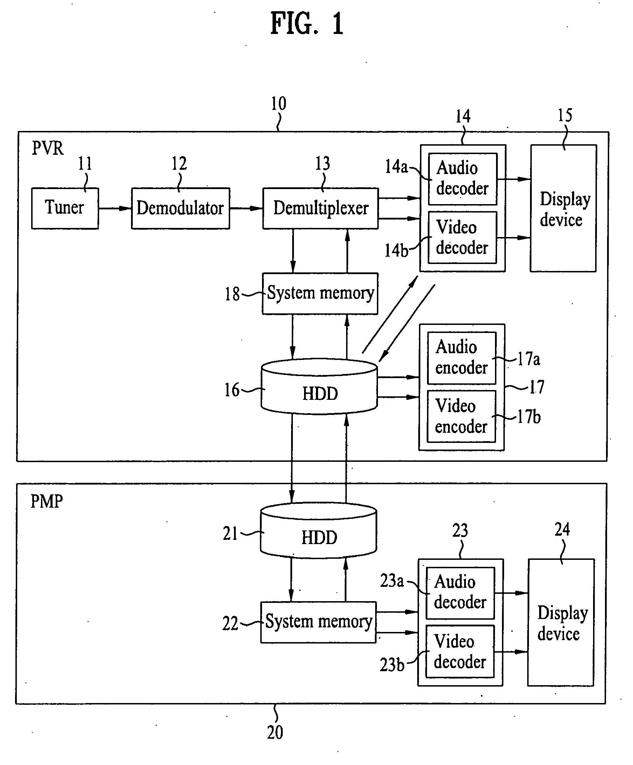

Referring to FIG. 1, a PVR 10 consists of a tuner 11 receiving a broadcast signal, a demodulator 12 demodulating an output signal from the tuner 11, a demultiplexer separating or demultiplexing an output signal from the demodulator into audio data and video data and then outputting the audio and video data to a decoder 14 or a system memory 18, the decoder 14 decoding the audio and video data, a display device 15 displaying an signal or OSD from the decoder 14, the system memory 18 storing the audio and video data from the demultiplexer 13 temporarily, an HDD 16 storing broadcast data from the system memory 18, and an encoder 17 encoding the data within the HDD 16 to be suitable for an external multimedia device (in this case, a PMP) to send the data to the external multimedia device.

In particular, the decoder 14 consists of an audio decoder 14a decoding (or, full-decoding) a separated audio signal and a video decoder 14b decoding (or, full-decoding) a video signal. And, the encoder 17 consists of an audio encoder 17a encoding (or, full-encoding) the audio signal and a video encoder 17b encoding (full-encoding) the video signal.

Meanwhile, a PMP 20 puts important value on portability and simplicity and is more convenient and smaller in function, structure and space.

The PMP 20 consists of an HDD 21 storing external data, a system memory 22 temporarily store data to process, a decoder 23 decoding data from the system memory 22 into displayable data, and a display device 24 displaying a signal from the decoder 23.

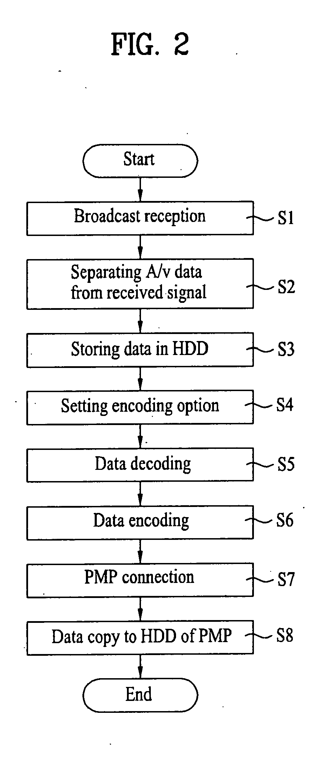

A process for receiving and processing a broadcast signal in the above-configured related art PVR and PMP 10 and 20 is explained with reference to FIG. 2 as follows.

First of all, if a broadcast signal is received from the tuner 11 of the PVR 10 (S1), the received broadcast signal is separated into an audio signal and a video signal by the demultiplexer 13 through demodulation (S2).

The separated audio and video signals are stored in the HDD 16 of the PVR 10 (S3). In doing so, since broadcast data is a broadcast signal according to MPEG-2 standard by ATSC (advanced television system committee), i.e., MPEG stream, it can be directly stored in the HDD 16 without preprocessing. And, a storage unit is a transport packet (hereinafter abbreviated TP) unit. Moreover, the TP unit is repeated until all broadcast signals are stored.

Subsequently, the broadcast signal (i.e., audio data and video data) stored in the HDD 16 is transferred to the PMP 20 that is an externally connected device of the PVR 10.

Yet, since the PMP 20 is simplified and small-sized due to its portability features, limitation is put on the data that can be processed by the PMP 20 itself. So, an encoding option should be set up for the sake of the PVR 10 to decide how to change parameters including a data format, a resolution, a frame rate and the like to convert the data stored in the HDD 20 of the PVR 10 to a format that can be processed by the PMP 20 (S4).

In order to perform encoding according to the above-set encoding option, the data stored in the HDD 16 is full-decoded in advance (S5).

The decoded data is then full-encoded by the encoder 17 based on the encoding option set suitable for the PMP 20 (S6).

Subsequently, the PMP 20 is connected to the PVR 10 (S7).

Finally, the data, which was encoded by the encoder 17 and then stored in the HDD 16 of the PVR 10, is copied to he HDD 21 of the PMP 20 (S8).

However, the related art process for transferring the broadcast signal of the PVR 10 to the PMP 20 has the following problems.

First of all, since the broadcast data is stored through the two accesses to the HDD 16 of the PVR 10 and the HDD 21 of the PMP 20, it is very inefficient in aspect of temporal and resource utilizations.

Secondly, in order to change the format, resolution, frame rate and the like to enable the data stored in the HDD 16 of the PVR 10 to fit the pattern of the PMP 20 again, all broadcast to be transferred should be full-decoded and full-encoded by non-real time. So, it takes a considerably long time.

Therefore, waste of resources and time is inevitable to store or view data through the interconnection between the related art PVR 10 to its externally connected device (e.g., PMP 20).

### SUMMARY OF THE INVENTION

Accordingly, the present invention is directed to a personal video recorder and method of transmitting a real-time broadcast signal to an external multimedia apparatus from the same that substantially obviate one or more problems due to limitations and disadvantages of the related art.

An object of the present invention is to provide a personal video recorder and method of transmitting a real-time broadcast signal to an external multimedia apparatus from the same, by which various application environments can be provided by establishing a multimedia support environment in transmitting broadcast data or reproducing a broadcast signal by a multimedia device in a manner of interconnecting a PVR to the multimedia device.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of transferring a broadcast signal according to the present invention includes the steps of connecting an external multimedia device to a personal video recorder, setting an encoding parameter corresponding to A/V parameters of the connected external multimedia device, receiving a broadcast signal via a tuner of the personal video recorder, separating A/V data into an audio signal and a video signal by demultiplexing the received broadcast signal, transcoding the separated audio and video signals into transcoded data by the set encoding parameter, and transferring the transcoded data to the external multimedia device.

Preferably, the method further includes the step of storing the transcoded data in an HDD of the external multimedia device.

Preferably, the external multimedia device includes at least one selected from the group a PMP, a PDA, a PSP and a mobile communication terminal.

Preferably, the encoding parameter includes a data format, resolution and frame rate supported by the external multimedia device.

In another aspect of the present invention, a personal video recorder, which is connected to an external multimedia device to transfer a broadcast signal, includes a control unit setting an encoding parameter corresponding to A/V parameters of the connected external multimedia device, a tuner receiving the broadcast signal, a demodulator converting the received broadcast signal to an intermediate frequency, a demultiplexer demultiplexing to separate the converted signal into an audio signal and a video signal, a system memory temporarily storing the separated audio and video signals, and a transcoder transcoding the audio and video signals from the system memory into transcoded data by the set encoding parameter.

Preferably, the transcoded data is stored in an HDD of the external multimedia device.

More preferably, the external multimedia device includes at least one selected from the group a PMP, a PDA, a PSP and a mobile communication terminal.

More preferably, the control unit sets the encoding parameter to a data format, resolution and frame rate supported by the external multimedia device.

Preferably, the transcoder performs real-time full-decoding and full-encoding on the received broadcast signal.

More preferably, the data format corresponds to at least one selected from the group consisting of a video, an audio, an image and a text.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a PVR and a PMP connected as an external device to the PVR to explain a data transmission process in-between;

FIG. 2 is a flowchart of a process for transferring broadcast data received by a PVR to a PMP;

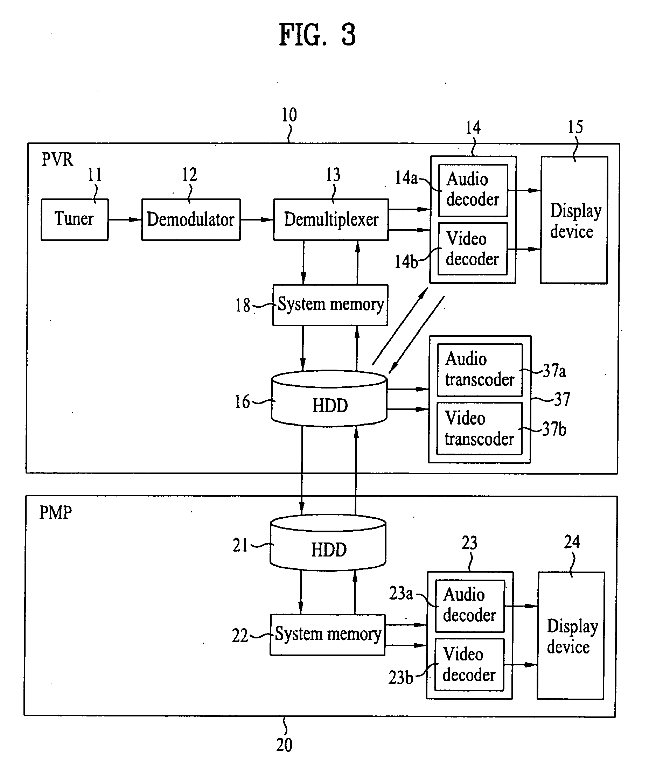

FIG. 3 is a block diagram of a PVR and a PMP externally connected to the PVR to transfer a broadcast signal in-between according to one embodiment of the present invention; and

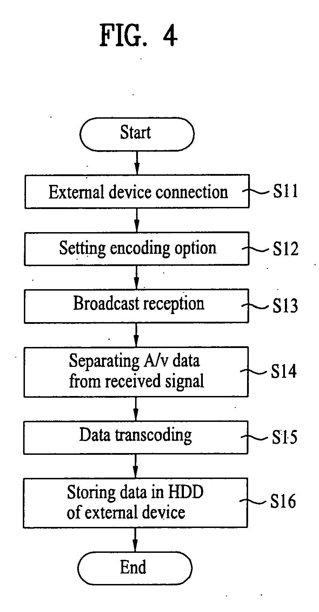

FIG. 4 is a flowchart of a process for transferring broadcast data received by a PVR to a PMP according to one embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

FIG. 3 is a block diagram of a PVR and a PMP externally connected to the PVR to transfer a broadcast signal in-between according to one embodiment of the present invention, and FIG. 4 is a flowchart of a process for transferring broadcast data received by a PVR to a PMP according to one embodiment of the present invention. In the drawings, same reference numbers are given to elements equivalent to those of the related PVR shown in FIG. 1 and explanations of parts overlapped with those of FIG. 1 will be omitted unless necessary.

Referring to FIG. 3, a PVR 30 according to one embodiment of the present invention includes a tuner 11, a demodulator 12, a demultiplexer 13, a decoder 14, a display device 15, an HDD 16, a transcoder 37 and a system memory 18.

The tuner 11 receives a broadcast signal with a tuned channel frequency.

The demodulator 12 converts the received broadcast signal to a signal of an intermediate frequency.

The demultiplexer 13 demultiplexes or separates an output signal outputted from the demodulator 12 into audio data and video data and then outputs the audio and video data to the decoder 14 or the system memory 18.

The decoder 14 decodes the demultiplexed audio and video data.

The display device 15 processes the decoded signal or OSD signal and then outputs the processed signal.

The system memory 18 temporarily stores the demultiplexed audio and video signals from the demultiplexer 13.

The HDD 16 stores the broadcast data from the system memory 18. In this case, the transcoder 37, which is an external multimedia device (e.g., PMP) to transfer a broadcast signal, transcodes the broadcast data from the system memory by video, audio and image formats and the like corresponding to a support option of an externally connected device and then transfers the transcoded signal.

In particular, the PVR 30 according to the present invention differs from the related art PVR 10 shown in FIG. 1 in the following matters.

First of all, the present invention employs the transcoder 37 instead of an encoder, whereas the related art PVR uses the encoder 17 to transform broadcast data to fit the external device.

Secondly, in transferring data from a PVR to a PMP as an externally connected device, data is directly inputted from the system memory 18 to the HDD 21 of the PMP 20 by real time via the transcoder 37 without passing through the HDD 16 of the PVR 10 in the present invention, whereas data is stored in the HDD 16 via the system memory 18 and is then inputted to the HDD 21 of the PMP 20 through an input-to-output process between the encoder 17 and the HDD 16 of the PVR 10 (i.e., through the HDD 16) in the related art.

Thus, the broadcast data can be directly transferred to the externally connected device without passing through the HDD 16 within the PVR 30. This is because the transcoder 37 is able to transcode the broadcast data by real time.

In particular, transcoding is to convert a format of a media file or object to another format. For example, a function of transcoding is applicable to a video format conversion (e.g., Beta to VHS, VHS to QuickTime, QuickTime to MPEG, etc.) or an optimization of HTML and graphic files to constraints of a portable device or web-enabled product.

Hence, the PVR 30 transcodes A/V data of the received broadcast signal by real time into data suitable for the format of the PMP 20 as the externally connected device. The transcoded data can be directly stored in the HDD 21 of the PMP 20.

Besides, the PMP 20 of the present invention has the same configuration of the related art PMP shown in FIG. 1, of which explanation will be omitted in the following description.

A process for processing and storing a broadcast signal received by real time using the above-configured PVR 30 and the PMP 20 as the externally connected device connected to the PVR 30 according to the present invention is explained with reference to FIG. 4 as follows.

Referring to FIG. 4, a broadcast signal processing method according to the present invention is carried out by real time.

First of all, an external device (e.g., PMP 20) is connected to the PVR 30 (S11).

An encoding parameter suitable for a format of an external multimedia device to be connected to the PVR 30 is selected (S12). In particular, the encoding option includes a format, a resolution, a frame rate and the like for example.

If a broadcast signal is received from the tuber 11 of the PVR 30 (S13), the received broadcast signal is separated into an audio signal and a video signal by the demultiplexer 13 through demodulation of the demodulator 12 (S14).

The separated audio and video signals are transcoded by the transcoder 37 according to the encoding parameter selected in the step S12 (S15). In this case, the transcoding is a process for full-decoding and full-encoding by differentiating data that is being broadcasted into short intervals.

Since the data transcoded in the step S15 needs not to pass through the HDD 16 of the PVR 30, it is directly inputted to the HDD 21 of the PMP 20 as the external multimedia device and then stored therein (S16).

In this case, the PMP is taken as the external multimedia device for example. Yet, the present invention is applicable to such an external multimedia device, which is able to use output data of the PVR, as a PDA (personal digital assistant), a PSP (Play Station Portable), a mobile phone, etc.

Accordingly, the present invention provides the following effects or advantages.

First of all, since the inputted broadcast signal data in the PVR 30 is directly stored in the external multimedia device without passing through the HDD 16, resources can be efficiently utilized and time taken for the data input/output in the HDD can be saved.

Secondly, since an encoding job for the data format suitable for the external multimedia device is performed by the transcoder 37 in the PVR 30, real-time data processing is enabled, whereby time taken for the related art to perform the non-real-time full-decoding and full-encoding can be saved.

Thirdly, the present invention is applicable to various external multimedia devices, thereby providing various application environments.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method of transferring a broadcast signal, comprising the steps of:
connecting an external multimedia device to a personal video recorder;
setting an encoding parameter corresponding to A/V parameters of the connected external multimedia device;
receiving a broadcast signal via a tuner of the personal video recorder;
separating A/V data into an audio signal and a video signal by demultiplexing the received broadcast signal;
transcoding the separated audio and video signals into transcoded data by the set encoding parameter; and
transferring the transcoded data to the external multimedia device.

2. The method of claim 1, further comprising the step of storing the transcoded data in an HDD of the external multimedia device.

3. The method of claim 1 or claim 2, wherein the external multimedia device comprises at least one selected from the group a PMP, a PDA, a PSP and a mobile communication terminal.

4. The method of claim 1, wherein the encoding parameter includes a data format, resolution and frame rate supported by the external multimedia device.

5. A personal video recorder, which is connected to an external multimedia device to transfer a broadcast signal, the personal video recorder comprising:
a control unit setting an encoding parameter corresponding to A/V parameters of the connected external multimedia device;
a tuner receiving the broadcast signal;
a demodulator converting the received broadcast signal to an intermediate frequency;
a demultiplexer demultiplexing to separate the converted signal into an audio signal and a video signal;
a system memory temporarily storing the separated audio and video signals; and
a transcoder transcoding the audio and video signals from the system memory into the transcoded data by the set encoding parameter.

6. The personal video recorder of claim 5, wherein the transcoded data is stored in an HDD of the external multimedia device.

7. The personal video recorder of claim 5 or claim 6, wherein the external multimedia device comprises at least one selected from the group a PMP, a PDA, a PSP and a mobile communication terminal.

8. The personal video recorder of claim 7, wherein the control unit sets the encoding parameter to a data format, resolution and frame rate supported by the external multimedia device.

9. The personal video recorder of claim 7, wherein the transcoder performs real-time full-decoding and full-encoding on the received broadcast signal.

10. The personal video recorder of claim 8, wherein the data format corresponds to at least one selected from the group consisting of a video, an audio, an image and a text.
